# EUROPÄISCHE PATENTSCHRIFT

(11) **EP 4 588 335 B1**
(45) Veröffentlichungstag und Bekanntmachung des Hinweises auf die Patenterteilung: **28.10.2026**
(21) Anmeldenummer: 24217372.2
(22) Anmeldetag: 04.12.2024
(51) Int. Cl.: A01F 15/08

(54) **BINDEEINRICHTUNG FÜR EINE QUADERBALLENPRESSE**
BINDING DEVICE FOR A RECTANGULAR BALER
DISPOSITIF DE LIAGE POUR PRESSE À BALLES CARRÉES

(30) Priorität: 17.01.2024 DE 102024101261
(43) Veröffentlichungstag der Anmeldung: 23.07.2025
(73) Patentinhaber: Usines CLAAS France S.A.S, 57140 St. Rémy / Woippy (FR)
(72) Erfinder: Rongvaux, Laurent, 54800 Tronville (FR); Albrecht, Jean Constant, 54210 Saint-Nicolas-de-Port (FR); Altmayer, Marc, 57320 Alzing (FR); Arnould, Cyrille, 57645 Montoy-Flanville (FR)
(74) Vertreter: CLAAS Gruppe

(56) Entgegenhaltungen:
- EP-A1- 4 248 731
- EP-B1- 3 298 884
- DE-A1- 19 627 397
- US-B1- 11 690 322

## Beschreibung

Die vorliegende Erfindung betrifft eine Bindeeinrichtung für eine Quaderballenpresse gemäß dem Oberbegriff des Anspruches 1 sowie eine Quaderballenpresse gemäß dem Oberbegriff des Anspruches 12.

Die vorliegende Erfindung betrifft eine Bindeeinrichtung zum Knoten eines bandförmigen Bindemittels für eine Quaderballenpresse, mit einer Antriebseinheit zum Antreiben der Bindeeinrichtung. Die Bindeeinrichtung zum Knoten eines bandförmigen Bindemittels umfasst eine von einer Knoterwelle angetriebene Knotervorrichtung sowie eine um eine zur Knoterwelle parallel verlaufende Schwenkachse schwenkbare Nadelschwinge, an der Bindenadeln angeordnet sind. Die Antriebseinheit weist ein von einer Antriebswelle angetriebenes schaltbares Getriebe auf, welches dazu ausgeführt und eingerichtet ist, die zumindest eine Knotervorrichtung und die Nadelschwinge mit den daran angeordneten Bindenadeln beim Auslösen eines Bindevorganges anzutreiben.

In Quaderballenpressen gepresste Erntegutballen werden regelmäßig nach dem Fertigstellen mit einem Bindemittel gebunden, damit sie nicht auseinanderfallen. Dafür werden beispielsweise bandförmige Bindemittel wie Bänder oder Garne genutzt. Solche Bindemittel werden in der Bindeeinrichtung zur Verfügung gestellt, die eine Obergarnführung, welche einen Knoter umfasst, sowie eine Untergarnführung aufweist. Nach Fertigstellen des Ballens wird die Untergarnführung zur Obergarnführung geführt und jeweils ein Untergarnfaden mit einem Obergarnfaden verknotet. Als Maß für die Fertigstellung des Erntegutballens wird üblicherweise die Ballenlänge genutzt. Es ist aber auch bekannt, den Bindevorgang des Erntegutballens zeitgesteuert auszulösen.

Eine Bindeeinrichtung sowie eine Quaderballenpresse mit einer Bindeeinrichtung der eingangs genannten Art sind aus der US 11,690,322 B1 bekannt. Die dort beschriebene Bindeeinrichtung weist eine Antriebseinheit mit einem Getriebe zum Antreiben der Bindeeinrichtung sowie eine separate Kupplung zum Auslösen eines Bindevorganges auf, welche auf einer Knoterantriebswelle angeordnet ist. Zum Auslösen des Bindevorganges ist eine ringförmige Kupplungsschale, die außenseitig am Getriebegehäuse angeordnet ist, mit einer Knoterwellenkupplung, die in der Kupplungsschale angeordnet ist, vorgesehen. Durch das Schalten der Knoterwellenkupplung wird die Knoterantriebswelle mit einer orthogonal zur Knoterantriebswelle orientierten Antriebswelle verbunden.

Eine Quaderballenpresse kommt unter widrigen Einsatz- und Umgebungsbedingungen zum Einsatz. Insbesondere die Staubbelastung beim Pressen von trockenem Erntegut führt zu einer signifikanten Belastung durch Verschmutzung. Bedingt durch die Bauform der Antriebseinheit und die dadurch bedingte außenseitige Anordnung der Knoterwellenkupplung am Getriebegehäuse ist die aus dem Stand der Technik bekannte Knoterwellenkupplung im Betrieb der Quaderballenpresse auftretenden Verschmutzungen nahezu ungeschützt ausgesetzt, was die Lebensdauer der Bindeeinrichtung erheblich beeinflussen kann.

Ausgehend vom vorstehend genannten Stand der Technik liegt der Erfindung die Aufgabe zugrunde, eine Bindeeinrichtung sowie eine Quaderballenpresse der eingangs genannten Art weiterzubilden, welche unter den widrigen Einsatz- und Umgebungsbedingungen während des Betriebs der Quaderballenpresse einen zuverlässigeren und langlebigeren Betrieb der Bindeeinrichtung gewährleisten.

Diese Aufgabe wird erfindungsgemäß durch eine Bindeeinrichtung mit den Merkmalen des Anspruches 1 sowie eine Quaderballenpresse mit den Merkmalen des Anspruches 12 gelöst. Vorteilhafte Weiterbildungen sind Gegenstand der abhängigen Ansprüche.

Gemäß dem Anspruch 1 wird eine Bindeeinrichtung für eine Quaderballenpresse zum Knoten eines bandförmigen Bindemittels, welches zum Binden eines gepressten Ballens vorgesehen ist, vorgeschlagen, wobei die Bindeeinrichtung zumindest eine von einer Knoterwelle angetriebene Knotervorrichtung, eine um eine zur Knoterwelle parallel verlaufende Schwenkachse schwenkbare Nadelschwinge, an der Bindenadeln angeordnet sind, sowie eine Antriebseinheit umfasst, wobei die Antriebseinheit ein von einer Antriebswelle angetriebenes schaltbares Getriebe aufweist, welches dazu ausgeführt und eingerichtet ist, die zumindest eine Knotervorrichtung und die Nadelschwinge beim Auslösen eines Bindevorganges anzutreiben. Erfindungsgemäß ist vorgesehen, dass das Getriebe ein Getriebegehäuse umfasst, in welchem Komponenten des Getriebes sowie eine Auslösevorrichtung zum Auslösen des Bindevorganges angeordnet sind.

Durch die Integration der Komponenten des Getriebes sowie der Auslösevorrichtung zum Auslösen des Bindevorganges in das Getriebegehäuse wird erreicht, dass sowohl die für den Antrieb als auch für das Auslösen der Bindeeinrichtung erforderlichen Komponenten geschützt vor äußeren Einflüssen an der Quaderballenpresse angeordnet sind. Die erfindungsgemäße Ausgestaltung führt dazu, dass die zum Auslösen und Durchführen des Bindevorgangs erforderlichen Komponenten von dem gemeinsamen Getriebegehäuse umschlossen sind, wodurch ein zuverlässiger Schutz dieser Komponenten vor im Betrieb der Quaderballenpresse auftretenden Verunreinigungen sichergestellt wird.

Insbesondere bilden eine Kegelradstufe und eine durch die Kegelradstufe mittels einer Abtriebswelle antreibbare Stirnradstufe Komponenten des Getriebes, die in dem Getriebegehäuse angeordnet und vollständig von diesem umschlossen sind. Dabei heißt von dem Getriebegehäuse vollständig umschlossen, dass die Antriebswelle und die Knoterwelle abschnittsweise aus dem Getriebegehäuse herausragen, um diese mit Antriebskomponenten oder anzutreibenden Komponenten außerhalb des Getriebegehäuses verbinden zu können.

Bevorzugt kann die Kegelradstufe ein auf der Antriebswelle angeordnetes oder mit der Antriebswelle verbindbares Kegelritzel und ein auf der Abtriebswelle angeordnetes Kegelrad aufweisen und die Stirnradstufe ein auf der Abtriebswelle drehbar gelagertes Zahnrad, welches mit einem auf der Knoterwelle drehfest angeordneten Gegenrad kämmt.

Insbesondere sind das Kegelrad, das Zahnrad und die Auslösevorrichtung in axialer Richtung der Abtriebswelle gesehen hintereinander angeordnet. Die hintereinanderliegende Anordnung von Kegelrad, Zahnrad und Auslösevorrichtung führt zu einer geringen Bauraumbeanspruchung. Dies vereinfacht die Integration der Komponenten des Getriebes in das Getriebegehäuse.

Weiterhin kann vorgesehen sein, dass das Zahnrad exzentrisch auf der Abtriebswelle und das Gegenrad exzentrisch auf der Knoterwelle angeordnet ist. Durch die jeweils exzentrische Anordnung von Zahnrad und Gegenrad kann der Bewegungsablauf der Nadelschwinge und der daran angeordneten Bindenadeln zeitlich mit der Hubbewegung des Presskolbens in Übereinstimmung gebracht werden. Das Auslösen und Durchführen des Bindevorganges erfordert einerseits ein schnelles Ein- und Ausschwenken der Bindenadeln und andererseits eine ausreichende Verweildauer der eingeschwenkten Bindenadeln für das Zusammenwirken mit der zumindest einen Knotervorrichtung. Die jeweils exzentrische Anordnung von Zahnrad und Gegenrad ermöglicht es, Bewegungen zu steuern und sicherzustellen, dass die Bindenadeln stets rechtzeitig aus dem Presskanal gezogen werden. Dies dient der Vermeidung einer Betriebssituation, in welcher der Presskolben mit der neuen zu verdichtenden Erntegutschicht gegen die Bindenadeln stößt und diese dabei beschädigt.

Insbesondere kann an der Knoterwelle ein Kurbelarm drehfest angeordnet sein, an welchem eine Antriebsstange mit einem Ende angelenkt ist, welche mit ihrem anderen Ende an der Nadelschwinge angelenkt ist.

Bevorzugt kann die Auslösevorrichtung als eine Klauenkupplung ausgeführt sein, die auf der dem Kegelrad abgewandten Seite der Abtriebswelle angeordnet ist. Die Ausführung der Auslösevorrichtung als eine Klauenkupplung stellt eine einfache Bauform einer Kupplung dar und ermöglicht die Übertragung hoher Drehmoment bei zugleich geringem Bauraumvolumen.

Hierbei ist vorgesehen, dass die Klauenkupplung zwei Kupplungsteile aufweist, wobei das eine Kupplungsteil drehfest und axial verschieblich auf der Abtriebswelle angeordnet ist und das andere Kupplungsteil, auf welchem das Zahnrad der Stirnradstufe drehfest angeordnet ist, frei drehbar auf der Abtriebswelle gelagert ist. Durch das axial verschiebliche Kupplungsteil lässt sich die Klauenkupplung schalten, um den Bindevorgang auszulösen.

Hierzu kann die Klauenkupplung durch Druck- oder Kraftbeaufschlagung betätigbar sein, um die Klauenkupplung aus einer geöffneten Schaltstellung in eine geschlossene Schaltstellung zu überführen. Das Überführen der Klauenkupplung als Auslösevorrichtung in die geschlossene Schaltstellung bewirkt, dass der Bindevorgang ausgelöst bzw. eingeleitet wird. Eine Druck- bzw. Kraftentlastung bewirkt entsprechend, dass die Klauenkupplung aus der geschlossenen Schaltstellung in die geöffnete Schaltstellung überführt wird.

Gemäß einer Weiterbildung kann auf der dem Zahnrad zugewandten Rückseite des Kegelrades ein Nockenhebel und auf der der Knotervorrichtung abgewandten Seite des Gegenrades eine Nockenrolle angeordnet sein. Die auf der der Knotervorrichtung abgewandten Seite des exzentrisch auf der Knoterwelle angeordneten Gegenrades angeordnete Nockenrolle kann durch den Nockenhebel entsprechend der Rotationsrichtung des Kegelrades temporär mitgenommen. Das für die letzte Umdrehung der Knoterwelle erforderliche Drehmoment kann von dem Nockenhebel auf die auf dem exzentrisch angeordneten Gegenrad befestigte Nockenrolle übertragen werden, wenn dieses Drehmoment durch die Schwenkbewegung der Nadelschwinge beim Zurückschwenken alleine nicht bereitgestellt werden kann.

Bevorzugt kann an der Abtriebswelle ein Kurbelarm drehfest angeordnet sein, an welchem eine teleskopierbare Antriebsstange mit einem Ende angelenkt ist, welche mit ihrem anderen Ende an der Nadelschwinge angelenkt ist. Durch die Rotation des an der Abtriebswelle angeordneten Kurbelarms und der damit verbundenen Bewegung und Längenänderung der teleskopierbaren Antriebsstange wird sichergestellt, dass die Bindenadeln auf die Hubbewegung des Presskolbens zur Verdichtung des Erntegutes zu einem neuen Quaderballen abgestimmt in den Presskanal ein- und ausschwenken.

Die Aufgabe wird ferner durch eine Quaderballenpresse mit den Merkmalen des nebengeordneten Anspruches 12 gelöst.

Gemäß dem Anspruch 12 wird eine Quaderballenpresse mit einer Bindeeinrichtung zum Knoten eines bandförmigen Bindemittels, welches zum Binden eines gepressten Ballens vorgesehen ist, vorgeschlagen, wobei die Bindeeinrichtung zumindest eine von einer Knoterwelle angetriebene Knotervorrichtung, eine um eine zur Knoterwelle parallel verlaufende Schwenkachse schwenkbare Nadelschwinge, an der Bindenadeln angeordnet sind, sowie eine Antriebseinheit umfasst, wobei die Antriebseinheit ein von einer Antriebswelle angetriebenes schaltbares Getriebe aufweist, welches dazu ausgeführt und eingerichtet ist, die zumindest eine Knotervorrichtung und die Nadelschwinge mit den daran angeordneten Bindenadeln beim Auslösen eines Bindevorganges anzutreiben, wobei die Bindeeinrichtung nach einem der Ansprüche 1 bis 11 ausgebildet ist. Auf die erfindungsgemäßen Vorteile der Bindeeinrichtung darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch eine Teilansicht einer Quaderballenpresse;
- Fig. 2: schematisch und exemplarisch eine Draufsicht auf eine ein Getriebe umfassende Antriebseinheit;
- Fig. 3: schematisch und exemplarisch eine Draufsicht auf das Getriebe gemäß Fig. 2 mit aktivierter Auslösevorrichtung;
- Fig. 4: schematisch und exemplarisch eine Draufsicht auf das Getriebe gemäß Fig. 3 am Ende einer Bindephase; und
- Fig. 5: schematisch und exemplarisch eine vereinfachte Teilansicht des Getriebes gemäß Fig. 4.

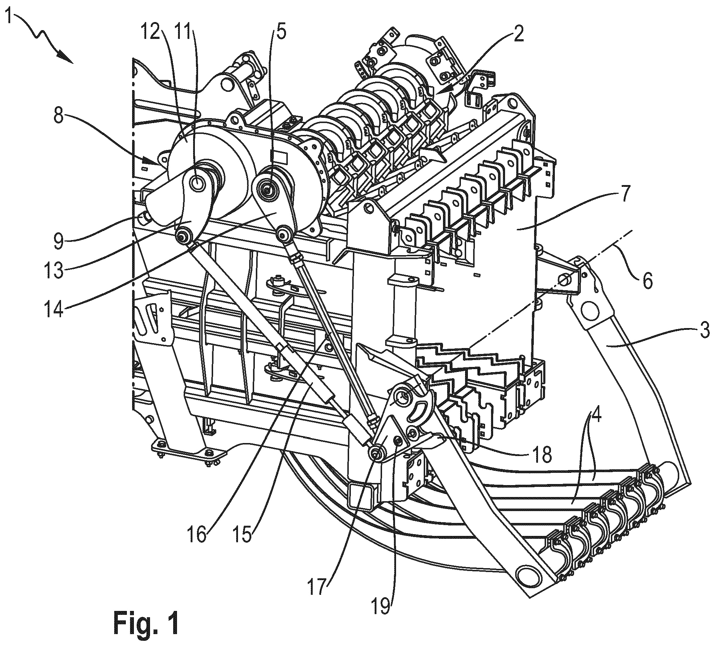

In Fig. 1 ist schematisch und exemplarisch eine Teilansicht einer Quaderballenpresse 1 dargestellt. Die Quaderballenpresse 1 ist mit einer in den Figuren nicht dargestellten landwirtschaftlichen Arbeitsmaschine, insbesondere einem Traktor, koppelbar, so dass die Quaderballenpresse 1 und die landwirtschaftliche Arbeitsmaschine gemeinsam einen sogenannten landwirtschaftlichen Zug ausbilden.

Die Quaderballenpresse 1 umfasst eine als Pick-Up bekannte Aufnahmevorrichtung zur Aufnahme von im Schwad auf einer landwirtschaftlichen Fläche abgelegten Ernteguts, einen Schneidrotor zum Zerkleinern des aufgenommenen Ernteguts, einen Raffer zum Vorverdichten des zerkleinerten Ernteguts und Zuführen desselben in einen Presskanal der Quaderballenpresse 1 sowie einen in dem Presskanal der Quaderballenpresse 1 zwischen Endlagen beweglich angeordneten Presskolben zum Pressen des vorverdichteten Ernteguts zu einem Quaderballen. In dem Presskanal wird das vorverdichtete Erntegut mit dem Presskolben, der im Presskanal zyklisch hin und her bewegt wird, zu dem Quaderballen gepresst. Weiterhin umfasst die Quaderballenpresse 1 eine Bindeeinrichtung zum Knoten eines bandförmigen Bindemittels, welches zum Binden eines gepressten Ballens vorgesehen ist.

Die Quaderballenpresse 1 weist einen nicht näher dargestellten Antriebsstrang auf, der mittels einer landwirtschaftlichen Arbeitsmaschine, insbesondere eines Traktors, mit einer Antriebsleistung versorgt. Hierzu weist die landwirtschaftliche Arbeitsmaschine heckseitig einen an sich bekannten Zapfwellenabtrieb auf.

Die Bindeeinrichtung umfasst zumindest eine von einer Knoterwelle 5 angetriebene Knotervorrichtung 2, um eine zur Knoterwelle 5 parallele Schwenkachse 6 schwenkbare, an einer Nadelschwinge 3 angeordnete Bindenadeln 4 sowie eine Antriebseinheit 8. Die Nadelschwinge 3 ist an einem den Presskanal umgebenden Gehäuse 7 angelenkt. Die an der Nadelschwinge 3 angeordneten Bindenadeln 4 wirken mit der zumindest einen Knotervorrichtung 2 beim Binden des gepressten Ballens zusammen.

Die Antriebseinheit 8 weist ein von einer Antriebswelle 9 angetriebenes schaltbares Getriebe 10 auf. Das schaltbare Getriebe 10 ist dazu ausgeführt und eingerichtet, die zumindest eine Knotervorrichtung 2 und die Bindenadeln 4 beim Auslösen eines Bindevorganges anzutreiben. Die Antriebswelle 9 treibt eine Abtriebswelle 11 des Getriebes 10 an. Das Getriebe 10 ist von einem Getriebegehäuse 12 umschlossen.

Der Antriebsstrang der Quaderballenpresse 1 umfasst die Antriebswelle 9, die wiederum einen Drehmomenteneingangsanschluss für den Antriebsstrang umfasst, mittels dem der Antriebsstrang der Quaderballenpresse 1 mit dem Zapfwellenabtrieb der landwirtschaftlichen Arbeitsmaschine verbindbar ist.

An der Knoterwelle 5 ist ein Kurbelarm 14 und an der Abtriebswelle 11 ist ein Kurbelarm 13 drehfest angeordnet. An dem Kurbelarm 13 an der Abtriebswelle 11 ist eine teleskopierbare Antriebsstange 15 mit einem Ende angelenkt. Die teleskopierbare Antriebsstange 15 ist mit ihrem anderen Ende an der Nadelschwinge 3 angelenkt. An dem Kurbelarm 14 an der Knoterwelle 5 ist eine Antriebsstange 16 mit einem Ende angelenkt, welche mit ihrem anderen Ende an der Nadelschwinge 3 angelenkt ist.

Die teleskopierbare Antriebsstange 15 und die Antriebsstange 16 können gemäß einer nicht dargestellten Ausführungsform an einem freien Ende eines gemeinsamen Hebelarmes um eine gemeinsame Drehachse angelenkt sein. Der gemeinsame Hebelarm ist mit seinem anderen Ende um die Schwenkachse 6 schwenkbar an der Nadelschwinge 3 angelenkt.

Die Darstellung in Fig. 1 zeigt eine Ausführungsform, gemäß der die teleskopierbare Antriebsstange 15 an einem ersten Hebelarm 17 um eine Drehachse schwenkbar angelenkt ist. Der erste Hebelarm 17 ist um die Schwenkachse 6 schwenkbar an der Nadelschwinge 3 angelenkt. Die Drehachse, um welche die teleskopierbare Antriebsstange 15 schwenkbar ist, ist zur Schwenkachse 6 radial beabstandet am ersten Hebelarm 17 angeordnet. Die von dem Kurbelarm 13 auf die teleskopierbare Antriebsstange 15 übertragene Drehbewegung führt zu einer linearen Bewegung der teleskopierbaren Antriebsstange 15, bei welcher diese bei jeder Drehung der Abtriebswelle 11 aus- und eingezogen wird.

Die Antriebsstange 16 ist an einem zweiten Hebelarm 18 angelenkt, der drehfest an der Nadelschwinge 3 befestigt ist. Der erste Hebelarm 17 ist mit dem zweiten Hebelarm 18 durch einen Scherbolzen 19 oder eine Scherschraube verbunden. Durch den Scherbolzen 19 können von der teleskopierbaren Antriebsstange 15 in ihrer Längsrichtung wirkende Kräfte auf den zweiten Hebelarm 18 und von diesem auf die Nadelschwinge 3 übertragen werden.

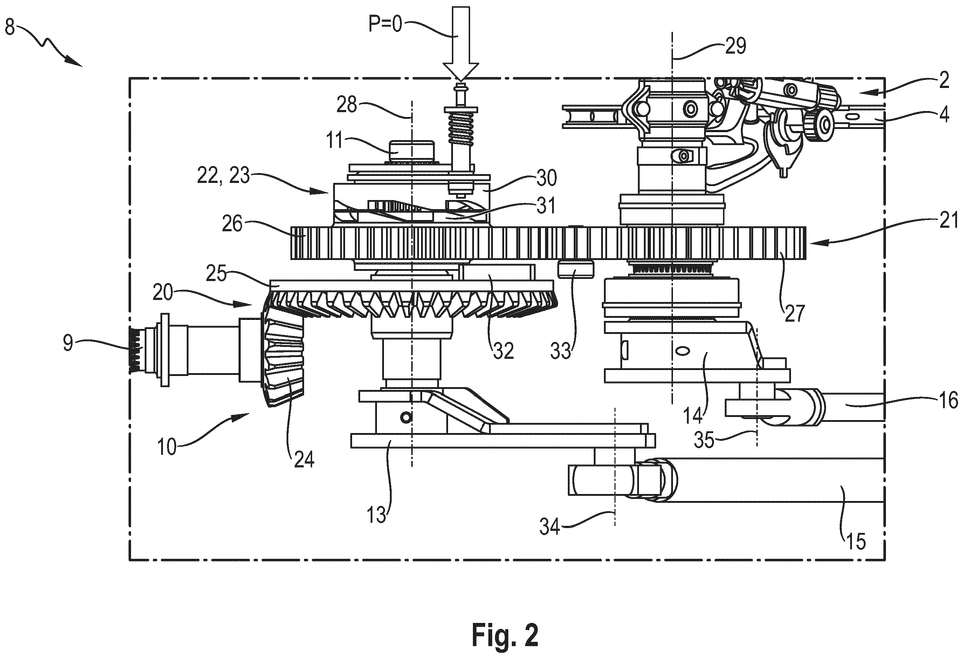

In Fig. 2 ist schematisch und exemplarisch eine Draufsicht auf die das Getriebe 10 umfassende Antriebseinheit 8 dargestellt. Die Darstellung dient der Veranschaulichung von Komponenten des schaltbaren Getriebes 10, die erfindungsgemäß von dem Getriebegehäuse 12 zum Schutz vor äußeren Einflüssen umschlossen sind. Dabei heißt von dem Getriebegehäuse 12 vollständig umschlossen, dass die Antriebswelle 9 und die Knoterwelle 5 abschnittsweise aus dem Getriebegehäuse 12 herausragen, um diese mit Antriebskomponenten oder anzutreibenden Komponenten außerhalb des Getriebegehäuses 12 verbinden zu können.

Eine Kegelradstufe 20 und eine durch die Kegelradstufe 20 mittels der Abtriebswelle 11 antreibbare Stirnradstufe 21 sowie eine als Klauenkupplung 23 ausgeführte Auslösevorrichtung 22 bilden die Komponenten des Getriebes 10, die von dem Getriebegehäuse 12 umschlossen sind. Mittels der Auslösevorrichtung 22 wird der Bindevorgang ausgelöst, wenn der gepresste Ballen eine vorgegebene Ballenlänge erreicht oder überschritten ist.

Das Übertragen einer Kraft von dem teleskopierbaren Aktuator 15 auf den zweiten Hebelarm 18 ist von der Schaltstellung der Auslösevorrichtung 22 abhängig.

Die Kegelradstufe 20 weist ein auf der Antriebswelle 9 angeordnetes oder mit dieser verbindbares Kegelritzel 24 und ein auf der Abtriebswelle 11 angeordnetes Kegelrad 25 auf.

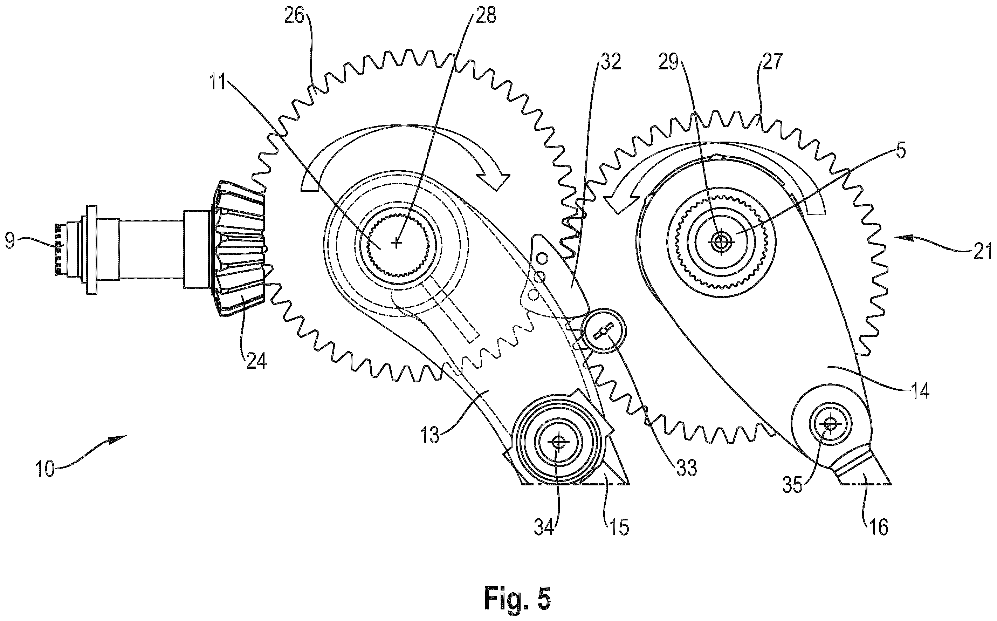

Die Stirnradstufe 21 weist ein auf der Abtriebswelle 11 drehbar gelagertes Zahnrad 26, welches mit einem auf der Knoterwelle 5 drehfest angeordneten Gegenrad 27 kämmt. Das Zahnrad 26 ist exzentrisch auf der Abtriebswelle 11 und das Gegenrad 27 ist exzentrisch auf der Knoterwelle 5 angeordnet, wie in Fig. 5 dargestellt.

Eine Drehachse der Abtriebswelle 11 ist mit dem Bezugszeichen 28 und eine Drehachse der Knoterwelle 5 ist mit dem Bezugszeichen 29 bezeichnet.

Die Klauenkupplung 23 weist zwei Kupplungsteile 30, 31 auf. Das eine Kupplungsteil 30 ist drehfest und axial verschieblich auf der Abtriebswelle 11 angeordnet. Das zum axial verschieblichen Kupplungsteil 30 komplementäre Kupplungsteil 31 ist frei drehbar auf der Abtriebswelle 11 gelagert. Auf dem frei drehbaren Kupplungsteil 31 ist das Zahnrad 26 der Stirnradstufe 21 drehfest angeordnet. Die Klauenkupplung 23 befindet sich in der in Fig. 2 dargestellten Ballenbildungsphase der Quaderballenpresse 1 in ausgekuppelter Stellung.

Die beiden Kupplungsteile 30, 31 weisen Klauen auf, die keilförmig ausgebildet und sich aus den jeweiligen Stirnflächen der Kupplungsteile 30, 31 erheben. Die keilförmige Ausbildung entsteht dadurch, dass sich die Klauen aus der Ringfläche der Stirnflächen heraus erheben. Dadurch übertragen die Klauen in eine Richtung ein Drehmoment, wobei in der anderen Richtung kein Drehmoment übertragen wird.

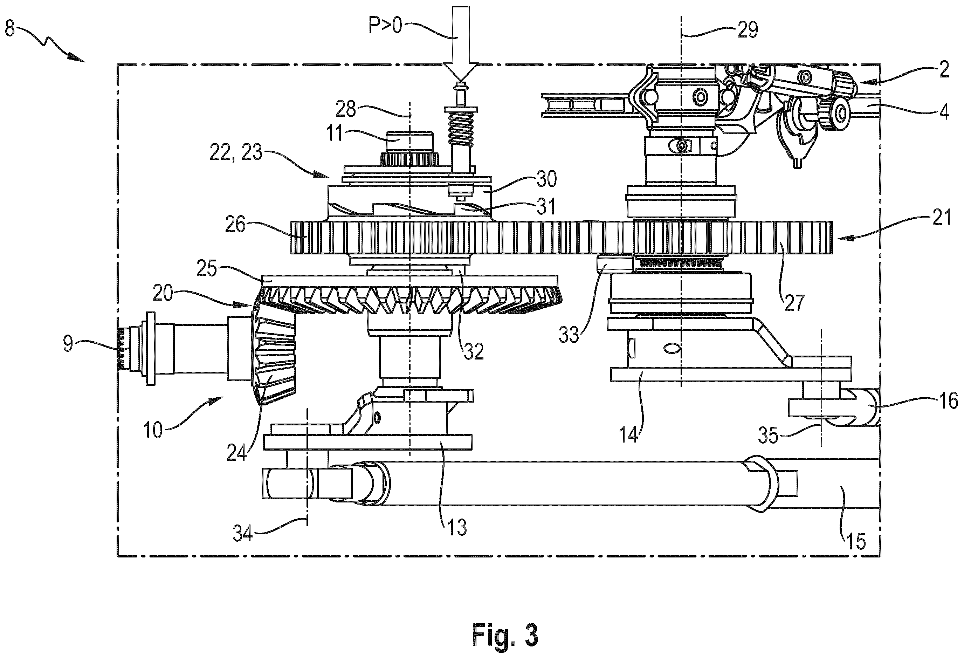

Durch eine Beaufschlagung des axial verschieblich auf der Abtriebswelle 11 angeordneten Kupplungsteils 30 mit einem pneumatischen oder hydraulischen Druck P oder einer in axialer Richtung wirkenden Kraft lässt sich die Klauenkupplung 23 in eine Stellung überführen, in der die Klauen der Kupplungsteile 30, 31 formschlüssig ineinandergreifen, wie in Fig. 3 dargestellt.

In Fig. 2 ist die Auslösevorrichtung 22 respektive die Klauenkupplung 23 ohne Druckbeaufschlagung in ihrer Bereitschaftsstellung gezeigt, d.h. der Druck P ist gleich Null. Das axial verschiebliche Kupplungsteil 30 ist gegenüber dem Kupplungsteil 31 soweit verdreht, dass die komplementären Klauen aufeinander stehen. Es findet keine Drehmomentübertragung durch die Klauenkupplung 23 statt, so dass die zumindest eine Knotervorrichtung 5 antriebslos ist. Aufgrund der fehlenden Druckbeaufschlagung verbleiben die beiden Kupplungsteile 30, 31 in dieser Bereitschaftsstellung der Auslösevorrichtung 22.

In der Bereitschaftsstellung der Auslösevorrichtung 22 rotiert der durch die Abtriebswelle 11 angetriebene Kurbelarm 13 permanent um die Drehachse 28, während der Kurbelarm 14 wegen der ausgerückten Position der Kupplungsteile 30, 31 stillsteht.

Die Abtriebswelle 11 dreht sich relativ zu dem darauf mittels des Kupplungsteils 31 drehbar gelagerten Zahnrad 26. Durch die Rotation des Kurbelarms 13 und der damit verbundenen Bewegung und Längenänderung der teleskopierbaren Antriebsstange 15 wird sichergestellt, dass sich die Bindenadeln 4 während der Ballenbildungsphase außerhalb des Presskanals befinden. Die Nadelschwinge 3 befindet sich dabei in einer Ruheposition. Hierzu weist die teleskopierbare Antriebsstange 15 eine Auszuglänge auf, so dass der Kurbelarm 13 während der Ballenbindungsphase vollständige Umdrehungen um die Drehachse 28 der Abtriebswelle 9 ausführen kann, während die Nadelschwinge 3 in ihrer Ruheposition verbleibt.

Auf der dem Zahnrad 26 zugewandten Rückseite des Kegelrades 25 ist ein Nockenhebel 32 angeordnet. Auf der der Knotervorrichtung 2 abgewandten Seite des Gegenrades 27 ist eine Nockenrolle 33 angeordnet. Die Funktion und das Zusammenwirken von Nockenhebel 32 und Nockenrolle 33 der Stirnradstufe 21 wird weiter unten anhand von Fig. 5 näher erläutert.

Eine Drehachse am Kurbelarm 13, um welche die teleskopierbare Antriebsstange 15 drehbar ist, ist mit dem Bezugszeichen 34 bezeichnet. Eine Drehachse am Kurbelarm 14, um welche die Antriebsstange 16 drehbar ist, ist mit dem Bezugszeichen 35 bezeichnet.

In Fig. 3 ist schematisch und exemplarisch eine Draufsicht auf das Getriebe 10 gemäß Fig. 2 mit aktivierter Auslösevorrichtung 22. Zur Aktivierung der Auslösevorrichtung 22 ist die Klauenkupplung 23 mit einem Druck P größer als Null beaufschlagt. Die Klauen der beiden Kupplungsteile 30, 31 greifen formschlüssig ineinander. Hierzu wird das axial verschiebliche Kupplungsteil 30 durch die Druckbeaufschlagung mit dem Druck P axial eingerückt. Durch die Betätigung der Auslösevorrichtung 22 werden eine Rotationsbewegung und ein Drehmoment durch die Stirnradstufe 21 auf die Knoterwelle 5 übertragen. Die Quaderballenpresse 1 befindet sich in der Bindephase. In der Bindephase wirken die zumindest eine Knotervorrichtung 2 und die Bindenadeln 4 zusammen, um das bandförmige Bindemittel aus Oberfaden und Unterfaden zu verknoten.

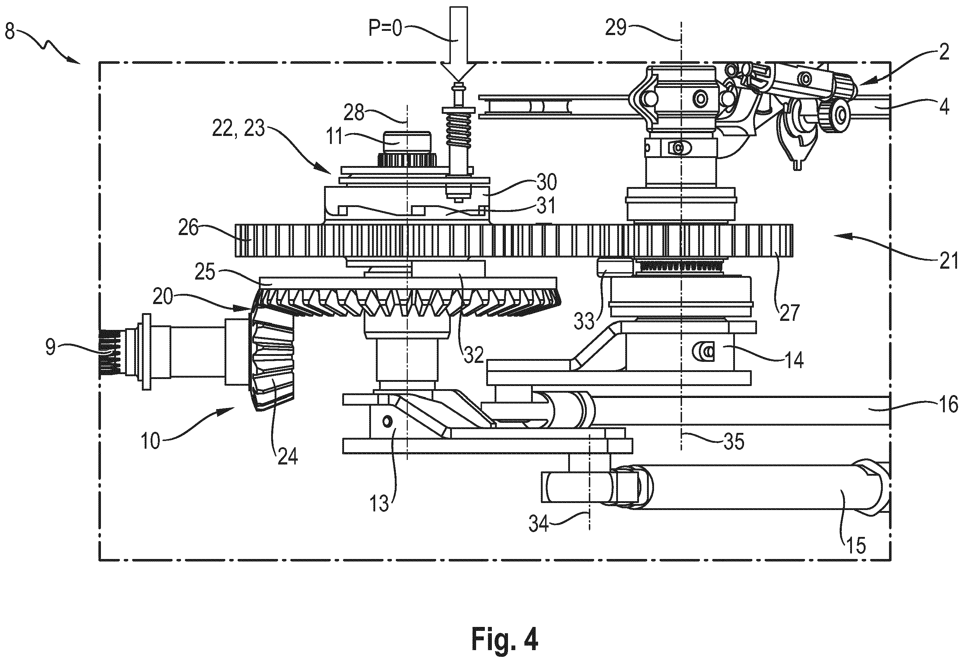

In Fig. 4 ist schematisch und exemplarisch eine Draufsicht auf das Getriebe 10 gemäß Fig. 3 am Ende der Bindephase gezeigt. Die Auslösevorrichtung 22 wird deaktiviert, indem der Druck P oder die Kraft, mit dem die Auslösevorrichtung 22 beaufschlagt wird, wieder auf null gesetzt wird.

Das axial verschiebliche Kupplungsteil 30 und das komplementäre Kupplungsteil 31 lösen sich zunächst in Umfangsrichtung voneinander, wobei sich zwischen benachbarten Klauen der Kupplungsteil 30, 31 ein Spalt ausbildet. In dieser Stellung, in der kein Drehmoment zwischen den beiden Kupplungsteilen 30, 31 übertragen wird, lässt sich die Klauenkupplung 23 lösen.

In dieser Phase wird die Nadelschwinge 3 mit den daran angeordneten Bindenadeln 4 durch die teleskopierbare Antriebsstange 15 zurückgeschwenkt, um den Presskanal freizugeben. Die Antriebsstange 16 wird dabei nicht mehr über die Stirnradstufe 21 angetrieben, sondern durch die Schwenkbewegung der Nadelschwinge 3 um die Schwenkachse 6. Die Antriebsstange 16 überträgt die Schwenkbewegung der Nadelschwinge 3 auf die zumindest eine Knotervorrichtung 2, um diese anzutreiben.

In Fig. 5 ist schematisch und exemplarisch eine vereinfachte Teilansicht des Getriebes 10 gemäß Fig. 4 dargestellt. Zur Veranschaulichung des dahinterliegenden Zahnrades 26 wurde das Kegelrad 25 in der Darstellung weggelassen. Das Zahnrad 26 und das Gegenrad 27 der Stirnradstufe 21 sind exzentrisch auf der Abtriebswelle 11 bzw. der Knoterwelle 5 angeordnet.

Um die Nadelschwinge 3 in ihre Ausgangsposition außerhalb des Presskanals zu überführen, wird die Rotationsbewegung der Knoterwelle 5 durch den Nockenhebel 32 unterstützt, der auf der dem Zahnrad 26 zugewandten Rückseite des Kegelrades 25 exzentrisch zur Drehachse 28 angeordnet ist. Die auf der der Knotervorrichtung 2 abgewandten Seite des exzentrisch auf der Knoterwelle 5 angeordneten Gegenrades 27 angeordnete Nockenrolle 33 wird durch den Nockenhebel 32 entsprechend der Rotationsrichtung des Kegelrades 25 temporär mitgenommen. Da für die letzte Umdrehung der Knoterwelle 5 ein Drehmoment erforderlich ist, übernehmen der Nockenhebel 32 und die auf dem exzentrisch auf der Knoterwelle 5 angeordneten Gegenrad 27 befestigte Nockenrolle 33 diese Funktion, wenn dieses Drehmoment durch die Schwenkbewegung der Nadelschwinge 3 bei ihrem Zurückschwenken alleine nicht bereitgestellt werden kann. Dabei überträgt der Nockenhebel 32 das vom Kegelrad 25 übertragene Drehmoment auf die Nockenrolle 33.

Wesentlich ist, dass der in den Fig. 2 bis 5 veranschaulichte Aufbau des Getriebe 10 eine kompakte und raumsparende Ausgestaltung ermöglicht, sodass das Getriebe 10 mit seinen Komponenten, der Kegelradstufe 20, der Stirnradstufe 21 sowie der als Klauenkupplung 23 ausgeführten Auslösevorrichtung 22, in dem gemeinsamen Getriebegehäuse 12 angeordnet werden können, welches die Komponenten vollständig umschließt, wie in Fig. 1 dargestellt.

**Bezugszeichenliste**

| | | | |
|---|---|---|---|
| 1 | Quaderballenpresse | 34 | Drehachse |
| 2 | Knotervorrichtung | 35 | Drehachse |
| 3 | Nadelschwinge | | |
| 4 | Bindenadel | P | Druck |
| 5 | Knoterwelle | | |
| 6 | Schwenkachse | | |
| 7 | Gehäuse | | |
| 8 | Antriebseinheit | | |
| 9 | Antriebswelle | | |
| 10 | Getriebe | | |
| 11 | Abtriebswelle | | |
| 12 | Getriebegehäuse | | |
| 13 | Kurbelarm | | |
| 14 | Kurbelarm | | |
| 15 | Antriebsstange | | |
| 16 | Antriebsstange | | |
| 17 | Erster Hebelarm | | |
| 18 | Zweiter Hebelarm | | |
| 19 | Scherbolzen | | |
| 20 | Kegelradstufe | | |
| 21 | Stirnradstufe | | |
| 22 | Auslösevorrichtung | | |
| 23 | Klauenkupplung | | |
| 24 | Kegelritzel | | |
| 25 | Kegelrad | | |
| 26 | Zahnrad | | |
| 27 | Gegenrad | | |
| 28 | Drehachse | | |
| 29 | Drehachse | | |
| 30 | Kupplungsteil | | |
| 31 | Kupplungsteil | | |
| 32 | Nockenhebel | | |
| 33 | Nockenrolle | | |

## Patentansprüche

1. Bindeeinrichtung für eine Quaderballenpresse (1) zum Knoten eines bandförmigen Bindemittels, welches zum Binden eines gepressten Ballens vorgesehen ist, wobei die Bindeeinrichtung zumindest eine von einer Knoterwelle (5) angetriebene Knotervorrichtung (2), eine um eine zur Knoterwelle (5) parallel verlaufende Schwenkachse (6) schwenkbare Nadelschwinge (3), an der Bindenadeln (4) angeordnet sind, sowie eine Antriebseinheit (8) umfasst, wobei die Antriebseinheit (8) ein von einer Antriebswelle (9) angetriebenes schaltbares Getriebe (10) aufweist, welches dazu ausgeführt und eingerichtet ist, die zumindest eine Knotervorrichtung (2) und die Nadelschwinge (3) beim Auslösen eines Bindevorganges anzutreiben, **dadurch gekennzeichnet, dass** das Getriebe (10) ein Getriebegehäuse (12) umfasst, in welchem Komponenten des Getriebes (10) sowie eine Auslösevorrichtung (22) zum Auslösen des Bindevorganges angeordnet sind.

2. Bindeeinrichtung nach Anspruch 1, **dadurch gekennzeichnet, dass** eine Kegelradstufe (20) und eine durch die Kegelradstufe (20) mittels einer Abtriebswelle (11) antreibbare Stirnradstufe (21) die Komponenten des Getriebes (10) bilden.

3. Bindeeinrichtung nach Anspruch 2, **dadurch gekennzeichnet, dass** die Kegelradstufe (20) ein auf der Antriebswelle (9) angeordnetes oder mit dieser verbindbares Kegelritzel (24) und ein auf der Abtriebswelle (11) angeordnetes Kegelrad (25) aufweist und die Stirnradstufe (21) ein auf der Abtriebswelle (11) drehbar gelagertes Zahnrad (26), welches mit einem auf der Knoterwelle (5) drehfest angeordneten Gegenrad (27) kämmt.

4. Bindeeinrichtung nach Anspruch 3, **dadurch gekennzeichnet, dass** das Kegelrad (25), das Zahnrad (26) und die Auslösevorrichtung (22) in axialer Richtung der Abtriebswelle (11) gesehen hintereinander angeordnet sind.

5. Bindeeinrichtung nach Anspruch 3 oder 4, **dadurch gekennzeichnet, dass** das Zahnrad (26) exzentrisch auf der Abtriebswelle (11) und das Gegenrad (27) exzentrisch auf der Knoterwelle (5) angeordnet ist.

6. Bindeeinrichtung nach einem der Ansprüche 3 bis 5, **dadurch gekennzeichnet, dass** an der Knoterwelle (5) ein Kurbelarm (14) drehfest angeordnet ist, an welchem eine Antriebsstange (16) mit einem Ende angelenkt ist, welche mit ihrem anderen Ende an der Nadelschwinge (3) angelenkt ist.

7. Bindeeinrichtung nach einem der Ansprüche 3 bis 6, **dadurch gekennzeichnet, dass** die Auslösevorrichtung (22) als eine Klauenkupplung (23) ausgeführt ist, die auf der dem Kegelrad (25) abgewandten Seite der Abtriebswelle (11) angeordnet ist.

8. Bindeeinrichtung nach Anspruch 7, **dadurch gekennzeichnet, dass** die Klauenkupplung (23) zwei Kupplungsteile (30, 31) aufweist, wobei das eine Kupplungsteil (30) drehfest und axial verschieblich auf der Abtriebswelle (11) angeordnet ist und das andere Kupplungsteil (31), auf welchem das Zahnrad (26) der Stirnradstufe (21) drehfest angeordnet ist, frei drehbar auf der Abtriebswelle (11) gelagert ist.

9. Bindeeinrichtung nach Anspruch 7 oder 8, **dadurch gekennzeichnet, dass** die Klauenkupplung (23) durch Druck- oder Kraftbeaufschlagung betätigbar ist, um die Klauenkupplung (23) aus einer geöffneten Schaltstellung in eine geschlossene Schaltstellung zu überführen.

10. Bindeeinrichtung nach einem der Ansprüche 3 bis 9, **dadurch gekennzeichnet, dass** auf der dem Zahnrad (26) zugewandten Rückseite des Kegelrades (25) ein Nockenhebel (32) und auf der der Knotervorrichtung (2) abgewandten Seite des Gegenrades (27) eine Nockenrolle (33) angeordnet ist.

11. Bindeeinrichtung nach einem der Ansprüche 2 bis 10, **dadurch gekennzeichnet, dass** an der Abtriebswelle (9) ein Kurbelarm (13) drehfest angeordnet ist, an welchem eine teleskopierbare Antriebsstange (15) mit einem Ende angelenkt ist, welche mit ihrem anderen Ende an der Nadelschwinge (3) angelenkt ist.

12. Quaderballenpresse mit einer Bindeeinrichtung zum Knoten eines bandförmigen Bindemittels, welches zum Binden eines gepressten Ballens vorgesehen ist, wobei die Bindeeinrichtung zumindest eine von einer Knoterwelle (5) angetriebene Knotervorrichtung (2), eine um eine zur Knoterwelle (5) parallel verlaufende Schwenkachse (6) schwenkbare Nadelschwinge (3), an der Bindenadeln (4) angeordnet sind, sowie eine Antriebseinheit (8) umfasst, wobei die Antriebseinheit (8) ein von einer Antriebswelle (9) angetriebenes schaltbares Getriebe (10) aufweist, welches dazu ausgeführt und eingerichtet ist, die zumindest eine Knotervorrichtung (2) und die Nadelschwinge (3) beim Auslösen eines Bindevorganges anzutreiben, **dadurch gekennzeichnet, dass** die Bindeeinrichtung nach einem der Ansprüche 1 bis 11 ausgebildet ist.

## Claims

1. Binding device for a square baler (1) for knotting a strip-shaped binding means which is provided for binding a compressed bale, wherein the binding device comprises at least one knotter apparatus (2) driven by a knotter shaft (5), a needle rocker (3) which is pivotable about a pivot axis (6) running parallel to the knotter shaft (5) and on which binding needles (4) are arranged, and a drive unit (8), wherein the drive unit (8) has a switchable transmission (10) which is driven by a drive shaft (9) and is designed and configured to drive the at least one knotter apparatus (2) and the needle rocker (3) when a binding process is triggered, **characterized in that** the transmission (10) comprises a transmission housing (12) in which components of the transmission (10) and a triggering apparatus (22) for triggering the binding process are arranged.

2. Binding device according to Claim 1, **characterized in that** a bevel gear stage (20) and a spur gear stage (21) which is drivable by the bevel gear stage (20) by means of an output shaft (11) form the components of the transmission (10).

3. Binding device according to Claim 2, **characterized in that** the bevel gear stage (20) has a bevel pinion (24) which is arranged on the drive shaft (9) or is connectable thereto and a bevel gear (25) arranged on the output shaft (11), and the spur gear stage (21) has a gearwheel (26) which is mounted rotatably on the output shaft (11) and meshes with a mating gear (27) arranged rotationally conjointly on the knotter shaft (5).

4. Binding device according to Claim 3, **characterized in that** the bevel gear (25), the gearwheel (26) and the triggering apparatus (22) are arranged one behind the other, as viewed in the axial direction of the output shaft (11).

5. Binding device according to Claim 3 or 4, **characterized in that** the gearwheel (26) is arranged eccentrically on the output shaft (11) and the mating gear (27) is arranged eccentrically on the knotter shaft (5).

6. Binding device according to one of Claims 3 to 5, **characterized in that** a crank arm (14) is arranged rotationally conjointly on the knotter shaft (5), on which crank arm a drive rod (16) is articulated at one end and is articulated at its other end on the needle rocker (3).

7. Binding device according to one of Claims 3 to 6, **characterized in that** the triggering apparatus (22) is designed as a claw clutch (23) which is arranged on that side of the output shaft (11) which faces away from the bevel gear (25).

8. Binding device according to Claim 7, **characterized in that** the claw clutch (23) has two clutch parts (30, 31), wherein one clutch part (30) is arranged rotationally conjointly and axially displaceably on the output shaft (11), and the other clutch part (31), on which the gearwheel (26) of the spur gear stage (21) is arranged rotationally conjointly, is mounted freely rotatably on the output shaft (11).

9. Binding device according to Claim 7 or 8, **characterized in that** the claw clutch (23) can be actuable by application of pressure or force in order to transfer the claw clutch (23) from an open switching position into a closed switching position.

10. Binding device according to one of Claims 3 to 9, **characterized in that** a cam lever (32) is arranged on the rear side of the bevel gear (25) facing the gearwheel (26) and a cam roller (33) is arranged on the side of the mating gear (27) facing away from the knotter apparatus (2).

11. Binding device according to one of Claims 2 to 10, **characterized in that** a crank arm (13) is arranged rotationally conjointly on the output shaft (9), on which crank arm a telescopic drive rod (15) is articulated at one end and is articulated at its other end on the needle rocker (3).

12. Square baler having a binding device for knotting a strip-shaped binding means which is provided for binding a compressed bale, wherein the binding device comprises at least one knotter apparatus (2) driven by a knotter shaft (5), a needle rocker (3) which is pivotable about a pivot axis (6) running parallel to the knotter shaft (5) and on which binding needles (4) are arranged, and a drive unit (8), wherein the drive unit (8) has a switchable transmission (10) which is driven by a drive shaft (9) and is designed and configured to drive the at least one knotter apparatus (2) and the needle rocker (3) when a binding process is triggered, **characterized in that** the binding device is designed according to one of Claims 1 to 11.

## Revendications

1. Système de liage pour une presse à balles carrées (1) pour nouer un moyen de liage en forme de bande, qui est prévu pour lier une balle pressée, le système de liage comprenant au moins un dispositif de nouage (2) entraîné par un arbre de nouage (5), un berceau d'aiguilles (3) pouvant pivoter autour d'un axe de pivotement (6) s'étendant parallèlement à l'arbre de nouage (5), sur lequel des aiguilles de liage (4) sont disposées, ainsi qu'une unité d'entraînement (8), l'unité d'entraînement (8) comportant une transmission (10) pouvant être commutée entraînée par un arbre d'entraînement (9), laquelle est conçue et mise au point pour entraîner l'au moins un dispositif de nouage (2) et le berceau d'aiguilles (3) lors du déclenchement d'une opération de liage, **caractérisé en ce que** la transmission (10) comprend un carter (12) de transmission, dans lequel des composants de la transmission (10) ainsi qu'un dispositif de déclenchement (22) sont disposés pour déclencher l'opération de liage.

2. Système de liage selon la revendication 1, **caractérisé en ce qu'**un étage d'engrenage conique (20) et un étage d'engrenage droit (21) pouvant être entraîné par l'étage d'engrenage conique (20) au moyen d'un arbre de sortie (11) forment les composants de la transmission (10).

3. Système de liage selon la revendication 2, **caractérisé en ce que** l'étage d'engrenage conique (20) comporte un pignon conique (24) disposé sur l'arbre d'entraînement (9) ou pouvant être relié à celui-ci et un engrenage conique (25) disposé sur l'arbre de sortie (11) et l'étage d'engrenage droit (21) comporte une roue dentée (26) montée de manière à pouvoir tourner sur l'arbre de sortie (11), laquelle s'engage avec une roue antagoniste (27) disposée de manière solidaire en rotation sur l'arbre de nouage (5).

4. Système de liage selon la revendication 3, **caractérisé en ce que** l'engrenage conique (25), la roue dentée (26) et le dispositif de déclenchement (22), vus dans la direction axiale de l'arbre de sortie (11), sont disposés les uns derrière les autres.

5. Système de liage selon la revendication 3 ou 4, **caractérisé en ce que** la roue dentée (26) est disposée de manière excentrée sur l'arbre de sortie (11) et la roue antagoniste (27) est disposée de manière excentrée sur l'arbre de nouage (5).

6. Système de liage selon l'une des revendications 3 à 5, **caractérisé en ce qu'**un bras de manivelle (14) est monté de manière solidaire en rotation sur l'arbre de nouage (5), sur lequel une tige d'entraînement (16) est articulée avec une extrémité, qui est articulée par son autre extrémité sur le berceau d'aiguilles (3).

7. Système de liage selon l'une des revendications 3 à 6, **caractérisé en ce que** le dispositif de déclenchement (22) est conçu comme un accouplement à griffes (23), qui est disposé sur le côté, opposé à l'engrenage conique (25), de l'arbre de sortie (11).

8. Système de liage selon la revendication 7, **caractérisé en ce que** l'accouplement à griffes (23) comporte deux parties d'accouplement (30, 31), une partie d'accouplement (30) étant disposée de manière solidaire en rotation et de manière à pouvoir coulisser axialement sur l'arbre de sortie (11) et l'autre partie d'accouplement (31), sur laquelle la roue dentée (26) de l'étage d'engrenage droit (21) est disposée de manière solidaire en rotation, étant montée de manière à pouvoir tourner librement sur l'arbre de sortie (11).

9. Système de liage selon la revendication 7 ou 8, **caractérisé en ce que** l'accouplement à griffes (23) peut être actionné par application de pression ou de force pour faire passer l'accouplement à griffes (23) d'une position de commutation ouverte à une position de commutation fermée.

10. Système de liage selon l'une des revendications 3 à 9, **caractérisé en ce qu'**un levier à came (32) est disposé, sur la face arrière, tournée vers la roue dentée (26), de l'engrenage conique (25), et un galet à came (33) est disposé sur la face, opposée au dispositif de nouage (2), de la roue antagoniste (27).

11. Système de liage selon l'une des revendications 2 à 10, **caractérisé en ce qu'**est disposé de manière solidaire en rotation sur l'arbre de sortie (9) un bras de manivelle (13), sur lequel une tige d'entraînement (15) télescopique est articulée par une extrémité, laquelle est articulée par son autre extrémité sur le berceau d'aiguilles (3).

12. Presse à balles carrées avec un système de liage pour nouer un moyen de liage en forme de bande, qui est prévu pour lier une balle pressée, ledit système de liage comprenant au moins un dispositif de nouage (2) entraîné par un arbre de nouage (5), un berceau d'aiguilles (3) pouvant pivoter autour d'un axe de pivotement (6) s'étendant parallèlement à l'arbre de nouage (5), sur lequel des aiguilles de liage (4) sont disposées, ainsi qu'une unité d'entraînement (8), l'unité d'entraînement (8) comportant une transmission (10) pouvant être commutée entraînée par un arbre d'entraînement (9), laquelle est conçue et mise au point pour entraîner l'au moins un dispositif de nouage (2) et le berceau d'aiguilles (3) lors du déclenchement d'une opération de liage, **caractérisée en ce que** le système de liage est formé selon l'une des revendications 1 à 11.
